# EUROPÄISCHE PATENTSCHRIFT

(11) **EP 0 667 983 B1**
(45) Veröffentlichungstag und Bekanntmachung des Hinweises auf die Patenterteilung: **24.02.1999**
(21) Anmeldenummer: 94924184.8
(22) Anmeldetag: 26.08.1994
(51) Int. Cl.: H01M 8/10, C25B 9/00, C08J 5/22

(54) **ELEKTROCHEMISCHE ZELLE MIT EINEM POLYMERELEKTROLYTEN UND HERSTELLUNGSVERFAHREN FÜR DIESEN POLYMERELEKTROLYTEN**
ELECTROCHEMICAL CELL WITH A POLYMER ELECTROLYTE AND PROCESS FOR PRODUCING THESE POLYMER ELECTROLYTES
CELLULE ELECTROCHIMIQUE COMPORTANT UN ELECTROLYTE POLYMERE ET PROCEDE DE FABRICATION DE CET ELECTROLYTE

(30) Priorität: 06.09.1993 CH 2636/93
(43) Veröffentlichungstag der Anmeldung: 23.08.1995
(73) Patentinhaber: PAUL SCHERRER INSTITUT, CH-5303 Würenlingen (CH)
(72) Erfinder: SCHERER, Günther G., CH-5607 Hägglingen (CH); BUECHI, Felix N., CH-3052 Zollikofen (CH); GUPTA, Bhuvanesh, New-Delhi 110017 (IN)
(74) Vertreter: EGLI-EUROPEAN PATENT ATTORNEYS
(86) Internationale Anmeldenummer: CH9400167
(87) Internationale Veröffentlichungsnummer: WO9507553

(56) Entgegenhaltungen:
- EP-A- 0 042 804
- EP-A- 0 140 544
- EP-A- 0 483 085
- EP-A- 0 572 810
- WO-A-92/15121
- FR-A- 2 257 617
- GB-A- 1 143 883
- GB-A- 2 088 883
- US-A- 4 113 922
- US-A- 4 804 592
- PROCEEDINGS OF THE 27TH INTERSOCIETY ENERGY CONVERSION ENGINEERING CONFERENCE - VOLUME 3 IECEC -92 SAN DIEGO CA 3-7 AUGUST 1992 Seiten 3.419 - 3.424 F. N. BÜCHI ET AL 'Radiation Grafted and Sulfonated (FEP-g-Polystyrene)' in der Anmeldung erwähnt
- JOURNAL OF APPLIED ELECTROCHEMISTRY., Bd.19, 1989, LONDON GB Seiten 566 - 570 T. ASAWA 'Material properties of cation exchange membranes for chloralkali electrolysis, water electrolysis and fuel cells'
- INTERNATIONAL JOURNAL OF HYDROGEN ENERGY., Bd.17, Nr.2, Februar 1992, OXFORD GB Seiten 115 - 123 G. G. SCHERER ET AL 'RADIATION GRAFTED MEMBRANES: SOME STRUCTURAL INVESTIGATIONS IN THE RELATION TO THEIR BEHAVIOUR IN ION-EXCHANGE-MEMBRANE WATER ELECTROLYSIS CELLS' in der Anmeldung erwähnt
- CHEMICAL ABSTRACTS, vol. 108, no. 6, 8. Februar 1988, Columbus, Ohio, US; abstract no. 41131k, IWAASA SHUZO ET AL 'Fuel cells with ion-exchange membrane electrolyte' in der Anmeldung erwähnt
- JOURNAL OF APPLIED ELECTROCHEMISTRY., Bd.22, 1992, LONDON GB Seiten 204 - 214 A. G. GUZMAN-GARCIA ET AL 'Analysis of radiation - grafted membranes for fuel cell electrolytes'

## Beschreibung

Die Erfindung betrifft eine elektrochemische Zelle mit
- einem Paar von Elektroden mit je einem Elektrodenkörper aus porösem Trägermaterial, das im wesentlichen aus durch ein Bindemittel zusammengehaltenen Kohlenstoff-Partikeln besteht und Poren aufweist, die eine Perkolation von Fluid durch den Elektrodenkörper erlauben und in denen der Elektrodenkörper mit einem am Trägermaterial abgelagerten Katalysator geladen ist,
- einem zwischen den Elektroden angeordneten, die beiden Elektrodenkörper elektrochemisch kontaktierenden, als Elektrolyt und Separator der elektrochemischen Zelle wirkenden Membranfilm aus einem hydrophilen, Protonen leitenden, polymeren Material, wobei zwischen dem Membranfilm und dem Trägermaterial mit dem daran abgelagerten Katalysator eine Zwischenschicht vorgesehen ist,
- Mitteln zum Einleiten eines Fluids in mindestens eine der Elektroden,
- Mitteln zum Herausleiten eines Fluids aus mindestens einer der Elektroden, und
- Mitteln zum elektrischen Kontaktieren der Elektroden. Ebenfalls betrifft die Erfindung ein Verfahren zur Herstellung des Materials des Membranfilms dieser elektrochemischen Zelle.

Eine elektrochemische Zelle der vorstehend erwähnten Art ist aus US-A-4876115 bekannt. In dieser bekannten Zelle wird als Elektrolyt und Separator eine Membran verwendet, deren Material ein Polymermaterial aus substituiertem Poly(perfluoralkylen) ist, wobei ein Teil der Substituenten endständig sulfoniert sind. Ein gemäss US-A-4876115 bevorzugtes Membranmaterial ist Nafion (Warenzeichen von DuPont), das u.a. in Römpps Chemie Lexikon dokumentiert und dort als Membranmaterial auf der Basis von Poly(perfluoralkylen)sulfonsäure bezeichnet wird. Zur Angabe von weiteren Membranmaterialien wird in US-A-4876115 auf US-A-4337137 verwiesen.

Solche perfluorierte Membranmaterialien gemäss US-A-4876115 zeigen aufgrund ihrer chemischen Zusammensetzung bei Temperaturen bis zu 100°C die für den Betrieb der elektrochemischen Zelle erforderliche Langzeitstabilität, sind aber sehr teuer. Ausserdem ist es sehr aufwendig und schwierig, einen zufriedenstellenden Kontakt zwischen solchen perfluorierten Membranmaterialien und den Elektroden zu erstellen.

Es sind bisher keine anderen Membranmaterialien bekannt, die bei deutlich günstigeren Herstellungkosten als für die perfluorierten Membranmaterialien gemäss US-A-4876115 die gewünschte Langzeitstabilität für den Betrieb von elektrochemischen Zellen zeigen.

Die thermisch und zeitlich begrenzte Stabilität von Membranmaterialien, insbesondere von mit einem Styrolderivat gepfropften und mit Divinylbenzol vernetzten Membranmaterialien, ist seit langem bekannt, beispielsweise aus "Introduction to SPE Cell Technology" von A.B. La Conti in "Proceedings of Oronzio de Nora Symposium", Venedig, 15.-18. Mai 1979, Seiten 94-127.

In diesem Zusammenhang wird die Langzeitstabilität wie folgt definiert: Die Membran einer elektrochemischen Zelle wird als stabil bezeichnet, wenn der durch den Membranwiderstand bedingte ohmsche Verlust in der Zelle bei einer Stromdichte von 1 A/cm² in 1000 Stunden um weniger als 100 mV ansteigt.

Andererseits zeigen die beispielsweise aus US-A-4469579, US-A-4506035 oder US-A-4605685 bekannten Membranmaterialien zwar die gewünschte Langzeitstabilität, sie sind aber sehr kostspielig und deshalb nicht zur Anwendung in grösserem Rahmen gekommen. Diese mit einem gegebenenfalls fluoriertem Styrolrest strahlengepfropften und dann sulfonierten Perfluoralkylen-Polymere oder Perfluoralkylen-Copolymere wären jedoch aufgrund ihrer Formbarkeit, Kontaktierbarkeit und weiterer günstiger Eigenschaften als Membranmaterialien für elektrochemische Zellen erwünscht.

Die Herstellung solcher Polymere und deren Verwendung als Membranmaterial für elektrochemische Zellen ist beispielsweise in "Radiation Grafted and Sulfonated (FEP-g-Polystyrene) - An Alternative to Perfluorinated Membranes for PEM Fuel Cells?" von F.N. Büchi et al in "Proceedings of the 27th Intersociety Energy Conversion Engineering Conference, San Diego, August 3-7, 1992, SAE Technical Paper Series 929293, pp. 3.419-3.423" ausführlich diskutiert. F.N. Büchi et al berichten, dass die Stabilität ihrer elektrochemischen Zellen bei Betriebstemperaturen von 60°C mehr als 300 Stunden erreichen konnte, jedoch bei 80°C alle untersuchten Membranen (diejenigen von F.N. Büchi et al selbst wie auch diejenigen, die sie zu Vergleichszwecken im Handel beschafft hatten) einen schnellen Abbau erlitten. Es zeigte also keine der von F.N. Büchi et al untersuchten elektrochemischen Zellen eine hinreichende Langzeitstabilität.

Aus "Chemical Abstracts" 108(6):41131k und JP-A-62-195855 ist eine elektrochemische Zelle der eingangs erwähnten Art bekannt. Der Membranfilm besteht aus ionenaustauschendem Polystyrol-Material Selemion CMV (Warenzeichen von Asahi Gaishi). Auf den beiden Oberflächen des Membranfilms wird durch Pfropfung je eine Schicht aus sulfoniertem Polystyrol gebildet. Die Elektroden bzw. deren Trägermaterial mit dem daran abgelagerten Katalysator werden mit einer Lösung des ionenaustauschenden sulfonierten Materials Nafion (Warenzeichen von DuPont) imprägniert. Danach wird die elektrochemische Zelle durch beidseitiges Anfügen der Elektroden an den Membranfilm zusammengebaut. Somit entsteht beiderseits des Membranfilms zwischen diesem und der imprägnierten Elektrode eine Zwischenschicht aus sulfoniertem Polystyrol, welches, gemäss den zitierten Dokumenten, ein Gel ist, so dass die Zwischenschicht in die Elektrode eindringt und eine gute Verbindung zwischen dem Membranfilm und der mit Nafion imprägnierten Elektrode gewährleistet. Damit wird erreicht, dass keine "Schwefelsäure" ausfliessen kann - offensichtlich werden hiermit in den zitierten Dokumenten die möglichen Abbauprodukte der Membran wie beispielsweise Toluolsulfonsäure gemeint. Mit dieser bekannten elektrochemischen Zelle wird zwar das Problem des Langzeitverhaltens in bezug auf das Ausfliessen von "Schwefelsäure" gelöst, das Problem des Langzeitverhaltens beim Betrieb oberhalb Raumtemperatur wird jedoch in den zitierten Dokumenten überhaupt nicht angegangen.

Ebenfalls aus EP-A-0483085 ist bekannt, die Elektroden bzw. deren Trägermaterial mit dem daran abgelagerten Katalysator mit einer Lösung des ionenaustauschenden sulfonierten Materials Nafion (Warenzeichen von DuPont) zu imprägnieren. Diese Veröffentlichung berichtet nur über das kurzzeitige Verhalten der elektrochemischen Zelle bei etwas erhöhter Temperatur und nur mit dem teuren Material Nafion, sie liefert somit keinen Beitrag zur Lösung des Problems des Langzeitverhaltens beim Betrieb oberhalb Raumtemperatur mit einem kostengünstigen Material.

Aus "Radiation Grafted Membranes: Some Structural Investigations in Relation to their Behavior in Ion-Exchange-Membrane Water Electrolysis Cells" von G.G. Scherer et al in Int. J. Hydrogen Energy, 17/2 (1992) pp. 115-123 ist bekannt, als Material des Membranfilms ein mit endständig sulfonierten Vinylresten strahlengepfropftes Grundpolymer zu verwenden, wobei als Grundpolymer einerseits ein Polytetrafluorethylen (PTFE), andererseits ein Polyethylen mit niedriger Dichte (LDPE) verwendet wurde. Das Langzeitverhalten der damit hergestellten elektrochemischen Zellen wurde beim Material auf Basis von LDPE nur bei Raumtemperatur untersucht. Beim Material auf Basis von PTFE mit Styrol als Vinylrest versagten die elektrochemischen Zellen schon bei 53°C. Beim Material auf Basis von PTFE mit Trifluorostyrol als Vinylrest bewährten sich die elektrochemischen Zellen zwar im Langzeitverhalten oberhalb Raumtemperatur, das betreffende Material ist aber teuer. Somit liefert auch diese Veröffentlichung keinen Beitrag zur Lösung des Problems des Langzeitverhaltens beim Betrieb oberhalb Raumtemperatur mit einem kostengünstigen Material.

Aufgabe des Erfindung ist es deshalb, eine elektrochemische Zelle der eingangs erwähnten Art vorzuschlagen, welche bei ihrem Betrieb insbesondere oberhalb Raumtemperatur erlaubt, unter Verwendung von kostengünstigeren Membranmaterialien als bisher eine hinreichende Langzeitstabilität zu erreichen.

Zur Lösung dieser Aufgabe ist eine elektrochemische Zelle der eingangs erwähnten Art dadurch gekennzeichnet, dass das Material des Membranfilms ein mit endständig sulfonierten Vinylresten strahlengepfropftes Grundpolymer ist, wobei
- das Grundpolymer aus der von substituierten und unsubstituierten Polyolefinen, substituierten und unsubstituierten Vinylpolymeren und deren Copolymeren gebildeten Gruppe ausgewählt ist und
- die Vinylreste von Vinylmonomeren abgeleitet sind, die aus der von substituierten und unsubstituierten Vinylmonomeren gebildeten Gruppe ausgewählt sind,
und zudem dadurch gekennzeichnet, dass die Zwischenschicht aus einem Protonen leitenden hydrophilen Copolymer von mit ionenaustauschenden Gruppen substituiertem Poly(perfluoralkylen) und mit nicht ionenaustauschenden Gruppen substituiertem Poly(perfluoralkylen) besteht.

Dabei wird die Zwischenschicht zumindest auf einer Seite auf dem Membranfilm aufgebracht und kann bei einem der Elektrodenkörper das Trägermaterial mit dem daran abgelagerten Katalysator umhüllen, indem der Elektrodenkörper in seinen Poren mit dem Protonen leitenden hydrophilen Copolymer imprägniert ist.

Vorzugsweise ist dabei das Grundpolymer ein aus der von Polyethylen, Polypropylen, Polytetrafluorethylen, Copolymer von Polytetrafluorethylen und Polyethylen sowie Copolymer von Polytetrafluorethylen und Polyhexafluorpropylen gebildeten Gruppe ausgewähltes Polyolefin oder ein aus der von Polyvinylfluorid, Polyvinylchlorid und Polyvinylidendifluorid gebildeten Gruppe ausgewähltes Vinylpolymer, während das Vinylmonomer vorzugsweise aus der von Styrol, alpha-Fluorstyrol, alpha-Methylstyrol und para-Chloromethylstyrol gebildeten Gruppe ausgewählt ist.

Vorzugsweise sind die am Grundpolymer strahlengepfropften Vinylreste durch von einem Vernetzungsmittel abgeleitete Reste vernetzt, wobei das Vernetzungsmittel vorzugsweise aus der von Divinylbenzol und Triallylcyanurat sowie Mischungen davon gebildeten Gruppe ausgewählt ist, wobei das Material des Membranfilms vorzugsweise strahlengepfropfte Vinylmonomer-Reste und Vernetzungsmittel-Reste in einem relativen Gewichtsverhältnis zueinander bis zu etwa 60:40 enthält.

Vorzugsweise enthält das Material des Membranfilms 15 bis 45 Gew.-% strahlengepfropfte Vinylmonomer-Reste.

Vorzugsweise weist der Membranfilm eine Dicke von mehr als etwa 50 µm, insbesondere von 80 bis 170 µm auf.

Die elektrochemische Zelle ist vorzugsweise entweder eine Brennstoffzelle, wobei
- eines der Mittel zum Einleiten eines Fluids als Mittel zum Einleiten eines gasförmigen Brennstoffs in die eine Elektrode ausgebildet ist,
- ein anderes der Mittel zum Einleiten eines Fluids als Mittel zum Einleiten eines gasförmigen Oxidationsmittels in die andere Elektrode ausgebildet ist,
- eines der Mittel zum Herausleiten eines Fluids als Mittel zum Herausleiten von Reaktionsprodukten aus der Verbrennungsreaktion zwischen dem Brennstoff und dem Oxidationsmittel aus der einen Elektrode ausgebildet ist,
- und gegebenenfalls ein anderes der Mittel zum Herausleiten eines Fluids als Mittel zum Herausleiten von mit dem gasförmigen Oxidationsmittel zugeführten inerten Gasen aus der anderen Elektrode ausgebildet ist,
oder eine Elektrolysenzelle, wobei
- die Mittel zum Einleiten eines Fluids als Mittel zum Einleiten eines zu elektrolysierenden Ausgangsmaterials ausgebildet sind,
- und die Mittel zum Herausleiten eines Fluids als Mittel zum Herausleiten von Reaktionsprodukten aus der elektrochemischen Zersetzung des Ausgangsmaterials ausgebildet sind.

Die elektrochemische Zelle kann auch wahlweise als Brennstoffzelle oder Elektrolysenzelle betreibbar sein.

Ein Verfahren zur Herstellung des Materials des Membranfilms dieser elektrochemischen Zelle ist gekennzeichnet durch die Verfahrensschritte von: Auswählen eines zu modifizierenden Grundpolymers aus der von substituierten und unsubstituierten Polyolefinen, substituierten und unsubstituierten Vinylpolymeren und deren Copolymeren gebildeten Gruppe; Auswählen eines Vinylmonomers aus der von substituierten und unsubstituierten Vinylmonomeren gebildeten Gruppe; Durchführung einer Pfropfungsreaktion des Grundpolymers mit dem Vinylmonomer in einem Gemisch davon durch Einwirkung von elektromagnetischer Strahlung auf das Gemisch zur Bildung des strahlengepfropften Polymers; und Sulfonierung des strahlengepfropften Polymers.

Eine erste bevorzugte Ausführungsvariante dieses Verfahrens umfasst als Verfahrensschritte die Beigabe und Mischung des Vinylmonomers in das Grundpolymer zur Bildung des Gemisches und die Durchführung der Pfropfungsreaktion im Gemisch durch Einwirkung von elektromagnetischer Strahlung auf das Gemisch.

Eine zweite bevorzugte Ausführungsvariante dieses Verfahrens umfasst als Verfahrensschritte die Bestrahlung des Grundpolymers mit elektromagnetischer Strahlung zur Bildung eines pfropfungsfähigen Zwischenpolymers, die Kühlung des Zwischenpolymers auf eine Temperatur unterhalb 0°C, die Beigabe und Mischung des Vinylmonomers in das kühle pfropfungsfähige Zwischenpolymer zur Bildung eines kühlen Gemisches und die Durchführung der Pfropfungsreaktion im Gemisch durch Erhöhung der Temperatur des Gemisches zumindest bis auf 20°C.

Eine dritte bevorzugte Ausführungsvariante dieses Verfahrens umfasst als Verfahrensschritte die Beigabe und Mischung des Vinylmonomers und des Vernetzungsmittels in das Grundpolymer zur Bildung eines Gemisches und die Durchführung der Pfropfungsreaktion durch Einwirkung von elektromagnetischer Strahlung auf das Gemiscn bei gleichzeitigem Ablauf einer Vernetzungsreaktion der am Grundpolymer strahlengepfropften Vinylreste durch das Vernetzungsmittel zur Bildung des vernetzten strahlengepfropften Polymers.

Eine vierte bevorzugte Ausführungsvariante dieses Verfahrens umfasst als Verfahrensschritte die Bestrahlung des Grundpolymers mit elektromagnetischer Strahlung zur Bildung eines pfropfungsfähigen Zwischenpolymers, die Kühlung des Zwischenpolymers auf eine Temperatur unterhalb 0°C, die Beigabe und Mischung des Vinylmonomers und des Vernetzungsmittels in das kühle pfropfungsfähige Zwischenpolymer zur Bildung eines kühlen Gemisches, und die Durchführung der Pfropfungsreaktion im Gemisch durch Erhöhung der Temperatur des Gemisches zumindest bis auf 20°C bei gleichzeitigem Ablauf einer Vernetzungsreaktion der am Grundpolymer strahlengepfropften Vinylreste durch das Vernetzungsmittel zur Bildung des vernetzten strahlengepfropften Polymers.

Mit den erfindungsgemässen elektrochemischen Zellen wird ganz überraschend eine hinreichende Langzeitstabilität erreicht. Der durch den Membranwiderstand bedingte ohmsche Verlust in den erfindungsgemässen elektrochemischen Zellen steigt über einen Zeitraum von etwa 1000 Stunden bei einer Stromdichte von etwa 1 A/cm² und einer Betriebstemperatur bis zu etwa 80°C um weniger als 100 mV an. Dieses Resultat ist, wie gesagt, vollständig überraschend, weil ja nicht nur das in der Erfindung definierte Material des Membranfilms der elektrochemischen Zellen, sondern auch dessen Verwendung in elektrochemischen Zellen bekannt waren, und dabei auch bekannt war, dass mit diesem Material keine hinreichende Langzeitstabilität der elektrochemischen Zellen erreicht wurde.

In diesem Zusammenhang ist zu beachten, dass in der vorangehend erwähnten Veröffentlichung von F.N. Büchi et al ganz stark (in Kursiv- und Fettdruck) hervorgehoben wird, in den darin beschriebenen Untersuchungen und Experimenten habe keine besondere Behandlung und insbesondere keine Imprägnierung der Elektroden stattgefunden.

Es war deshalb nicht zu erwarten und ist deshalb überraschend, dass der Einsatz dieses an sich bekannten Materials in einer elektrochemischen Zelle, die mit besonders ausgebildeten Elektroden versehen ist, wobei nicht nur diese elektrochemischen Zelle, sondern auch diese besondere Ausbildung ihrer Elektroden an sich bekannt waren, zu einer hinreichenden, Langzeitstabilität der erfindungsgemässen elektrochemischen Zelle führt.

Mit der Erfindung können elektrochemische Zellen hergestellt werden, deren als Elektrolyt und Separator der elektrochemischen Zelle wirkender Membranfilm wesentlich kostengünstiger zu stehen kommt als bei den bisherigen, beispielsweise mit Nafion (Warenzeichen von DuPont) versehenen elektrochemischen Zellen, was bei etwa gleicher Leistung unter etwa gleichen Betriebsbedingungen zu einer deutlichen Verringerung der Kosten der elektrochemischen Zellen führt. Typisch werden unter gleichen Betriebsbedingungen und bei einer Zellenspannung von etwa 0,5 V mit einer erfindungsgemässen elektrochemischen Zelle eine Leistung von 205 mW/cm² und mit einer herkömmlichen Zelle gemäss US-A-4876115 und mit dem Membranmaterial Nafion 117 (Warenzeichen von DuPont) eine Leistung von 225 mW/cm² erhalten, die erhaltenen Leistungen sind also im wesentlichen vergleichbar.

Wesentlich leichter und kostengünstiger und deshalb besonders vorteilhaft ist das aus US-A-4605685 bekannte Vorgehen, bei welchem zunächst das zu pfropfende Gemisch in die Form eines Films gebracht und danach die Pfropfungsreaktion gegebenenfalls zusammen mit der Vernetzungsreaktion im Film durchgeführt wird.

Auch bei der Herstellung des Materials des Membranfilms der erfindungsgemässen elektrochemischen Zelle kann man vorgehen, wie es in US-A-4605685 beschrieben ist. Beispielsweise wird ein Gemisch verwendet, das als Grundpolymer ein Copolymer von Polytetrafluorethylen und Polyhexafluorpropylen, als Vinylmonomer Styrol und als Vernetzungsmittel Divinylbenzol enthält. Dieses Gemisch wird in die Form eines Films von etwa 50 µm Dicke gebracht und mit der Gammastrahlung einer Co⁶⁰-Quelle bestrahlt, um das Copolymer mit dem Styrol zu pfropfen und mit dem Divinylbenzol zu vernetzen. Die Bestrahlung erfolgt mit einer Strahlungsdosis von beispielsweise 2 bis 10 Mrad, wenn die Bestrahlung vor der Pfropfung und Vernetzung stattfindet, oder von 0,1 bis 1 Mrad, wenn die Pfropfung und Vernetzung während der Bestrahlung stattfindet. Die Pfropfung und Vernetzung erfolgen beispielsweise bei einer Temperatur von 40°C bis 80°C in einer Zeitdauer von 10 bis 60 Stunden.

Anschliessend wird das so erhaltene strahlengepfropfte und vernetzte Zwischenmaterial endständig sulfoniert, wie es in US-A-4605685 beschrieben ist, beispielsweise bei einer Temperatur von 40°C bis 90°C in einer Zeitdauer von 1 bis 10 Stunden.

Das resultierende Material wird als Elektrolyt und Separator in einer elektrochemischen Zelle verwendet, die beispielsweise so aufgebaut sein kann, wie es aus US-A-4876115 bekannt ist.

EP-A-0 572 810 betrifft ebenfalls eine Membran-Elektroden-Anordnung zur Verwendung in einem thermoelektrochemischen System. Diese Anordnung umfasst eine strahlengepfropfte Kationen-Austausch-Membran, die an ihren Oberflächen mittels 1.5-stündigem Plasma-Ätzen (bei reduziertem Druck von 0.1 bar und einer Plasmaenergie von 200 W) bearbeitet wird um eine geätzte Anoden- bzw. Kathoden-Oberfläche bereitzustellen. Mittels thermischem Verbinden während 2 Minuten ("Bonding" bei 200°C) und Verpressen ("Pressing" bei 140.7 kg/cm²) werden die Elektroden mit der Membran verbunden.

Nachstehend werden Ausbildungsbeispiele der Erfindung anhand der Zeichnung näher beschrieben.

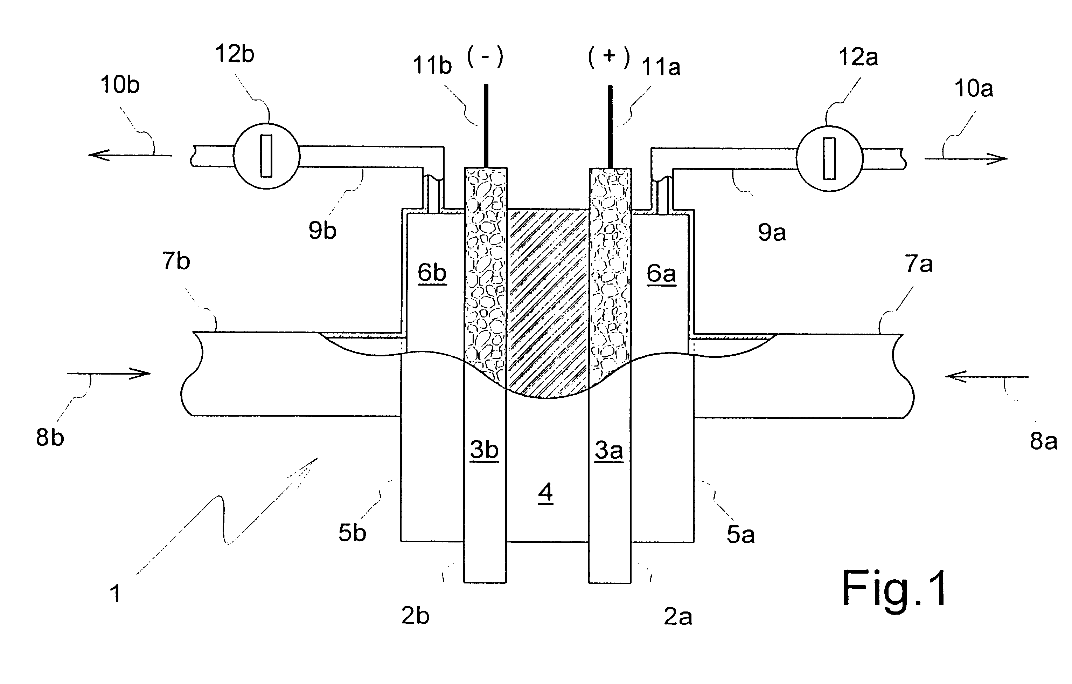

- Figur 1: zeigt schematisch, nicht massstabgetreu und teilweise im Schnitt eine Ausbildung einer erfindungsgemässen elektrochemische Zelle.

Wie in Figur 1 dargestellt, ist allgemein mit 1 bezeichnet eine elektrochemische Zelle mit einem Paar von Elektroden 2a, 2b versehen. Die Elektroden 2a, 2b sind als im wesentlichen flache Elektrodenkörper 3a, 3b geformt. Zwischen den Elektroden 2a, 2b bzw. den Elektrodenkörpern 3a, 3b ist eine als Film oder Folie ausgebildete Membran 4 sandwichartig eingelegt und derart angeordnet, dass sie die beiden Elektrodenkörper 3a, 3b elektrochemisch kontaktiert. Die aus dem Elektrodenkörper 3a, 3b und der Membran 4 bestehende sandwichartige Struktur wird zwischen zwei etwa glockenförmige Gehäuseteile 5a, 5b zusammengepresst, wobei diese Gehäuse teile 5a, 5b zusammen mit den Elektrodenkörpern 3a, 3b jeweilige Kammern 6a, 6b definieren.

Die Elektrodenkörper 3a, 3b bestehen aus porösem Trägermaterial, und dieses bestent seinerseits im wesentlichen aus durch ein Bindemittel zusammengehaltenen Kohlenstoff-Partikeln und weist Poren auf, die eine Perkolation von Fluid durch den Elektrodenkörper erlauben und in denen der Elektrodenkörper mit einem am Trägermaterial abgelagerten Katalysator geladen ist, wie es beispielsweise aus US-A-4876115 bekannt ist.

An den Gehäuseteilen 5a, 5b sind Zuleitungen 7a, 7b angeschlossen, die für die Zuleitung von Fluid gegebenenfalls unter Druck in die jeweilige Kammer 6a, 6b vorgesehen sind, wie es die Pfeile 8a, 8b zeigen. Das Fluid wird somit in die Elektroden 2a, 2b eingeleitet, und es gelangt durch die porösen Elektrodenkörper 3a, 3b hindurch zur Membran 4, welche somit als Elektrolyt und Separator der elektrochemischen Zelle 1 wirkt. Ebenfalls sind an den Gehäuseteilen 5a, 5b Ableitungen 9a, 9b angeschlossen, welche über die Ventile 12a, 12b das Fluid aus der jeweiligen Kammer 6a, 6b herausleiten, wie es die Pfeile 10a, 10b zeigen. Je nach der gewünschten Betriebsart der elektrochemischen Zelle 1 wird also das Fluid in den Kammern 6a, 6b zur betreffenden Elektrode 2a, 2b zugeleitet oder davon weggeleitet.

Schliesslich sind, zum elektrischen Kontaktieren der Elektroden 2a, 2b elektrische Leitungen 11a, 11b vorgesehen, welche in die Elektrodenkörper 3a, 3b eingelassen oder sonstwie daran befestigt sind, um beispielsweise die Elektrode 2a als Anode und die Elektrode 2b als Kathode zu schalten.

Die elektrochemische Zelle 1 kann als Brennstoffzelle betrieben werden. In diesem Fall dient die Zuleitung 7a zum Einleiten eines gasförmigen Brennstoffs wie beispielsweise Wasserstoff, Methan, Erdgas und dergleichen über die anodenseitige Kammer 6a in die eine Elektrode bzw. Anode 2a, während die Zuleitung 7b zum Einleiten eines gasförmigen Oxidationsmittels wie beispielsweise Sauerstoff oder Luft über die kathodenseitige Kammer 6b in die andere Elektrode bzw. Kathode 2b dient. Zudem dient die Ableitung 9a zum herausleiten von Reaktionsprodukten aus der Verbrennungsreaktion zwischen dem Brennstoff und dem Oxidationsmittel, beispielsweise Kohlendioxid, aus der einen Elektrode bzw. Anode 2a uber die anodenseitige Kammer 6a, während die Ableitung 9b zum Herausleiten von mit dem gasförmigen Oxidationsmittel zugeführten inerten Gasen, im wesentlichen Wasser und den Stickstoff der Luft, aus der anderen Elektrode bzw. Kathode 2b über die kathodenseitige Kammer 6b dient.

Die elektrochemische Zelle 1 kann auch als Elektrolysenzelle betrieben werden. In diesem Fall dienen eine oder beide Zuleitungen 7a, 7b zum Einleiten eines zu elektrolysierenden Ausgangsmaterials, wie beispielsweise Wasser, wässrige Salzsaurelösung und dergleichen, über die entsprechenden Kammer 6a, 6b in eine oder beide Elektroden 2a, 2b, während die Ableitung 9a zum Herausleiten von Reaktionsprodukten aus der elektrochemischen Zersetzung des Ausgangsmaterials, beispielsweise Sauerstoff, Ozon, Chlor und dergleichen, aus der einen Elektrode bzw. Anode 2a über die anodenseitige Kammer 6a und die Ableitung 9b zum Herausleiten von Reaktionsprodukten aus der elektrochemischen Zersetzung des Ausgangsmaterials, im wesentlichen Wasserstoff, aus der anderen Elektrode bzw. Kathode 2b über die kathodenseitige Kammer 6b dient.

Schliesslich kann die elektrochemische Zelle 1, als Kombination der beiden oben angegebenen Möglichkeiten, wahlweise als Brennstoffzelle oder Elektrolysenzelle betrieben werden.

Die Zwischenschicht ist auf dem Membranfilm aufgebracht und kann diesen ein- oder beidseitig überdecken.

Dabei können die Elektrodenkörper 2a, 3a oder zumindest einer davon auf im wesentlichen gleiche Weise wie bei US-A-4876115 in den Poren mit einem Material imprägniert sein, welches den Wirkungsgrad der elektrochemischen Zelle verbessert und ein Protonen leitendes hydrophiles Copolymer von mit ionenaustauschenden Gruppen substituiertem Poly(perfluoralkylen) und mit nicht ionenaustauschenden Gruppen substituiertem Poly(perfluoralkylen) ist, während die Membran ihrerseits aus einem hydrophilen, Protonen leitenden, polymeren Material besteht, das wie weiter oben definiert ein mit endständig sulfonierten Vinylresten strahlengepfropftes, gegebenenfalls vernetztes Grundpolymer ist. Somit ist bei mindestens einem der Elektrodenkörper 2a, 3a das Trägermaterial mit dem daran abgelagerten Katalysator in den Poren des Elektrodenkörpers von einer Zwischenschicht aus dem genannten Copolymer umhüllt.

Im nachfolgenden werden Ausführungsbeispiele der Erfindung gegeben. Es ist dabei zu verstehen, dass die Erfindung weder durch diese Ausfünrungsbeispiele eingeschränkt noch auf diese Ausführungsbeispiele beschränkt ist.

Ausserdem ist das in den Beispielen 8 bis 14 resultierende relative Gewichtsverhältnis zwischen Vinylmonomer-Resten und Vernetzungsmittel-Resten sehr schwer zu bestimmen. Es wurde deshalb in den Beispielen nicht direkt als Gewichtsverhältnis, sondern indirekt über das Volumenverhältnis in der Propfungslösung angegeben.

### Beispiel 1

Es wurden 50 µm dicke Filme aus einem Copolymer von Tetrafluorethylen und Hexafluorpropylen (FEP) in einer Co⁶⁰-Kammer mit einer Dosis von 2 Mrad bestrahlt. Anschliessend wurden die Filme in einem Polyethylenbeutel bei etwa -60°C in einem Tiefkühlschrank für mehrere Tage bzw. Wochen aufbewahrt.

Ein solcher Film wurde in ein mit einem Gemisch von 60 Vol.-% Styrol und 40 Vol.-% Benzol gefülltes Glasgefäss gegeben, wobei das Glasgefäss vorher durch mehrere Gefrier- und Auftauzyklen entgast wurde. Daraufhin wurde das Glasgefäss in einem bei 60°C gehaltenen Thermostat während 8 Stunden aufbewahrt. Anschliessend wurde das Glasgefäss geöffnet, und der Film wurde herausgenommen und mit Toluol in einer Soxhletapparatur während 5 Stunden extrahiert. Danach wurde der Film unter Vakuum getrocknet und gewogen. Aus der Gewichtszunahme wurde ein Pfropfungsgrad von 15 %, bezogen auf das Ausgangsgewicht des FEP-Filmes, errechnet.

Der gepfropfte Film wurde in ein Glasgefäss gegeben, das ein Gemisch von 70 Vol.-% 1,1,2,2-Tetrachiorethan und 30 Vol.-% Chlorsulfonsäure enthielt. Unter Rühren wurde der Film bei 80°C während 5 Stunden in diesem Gemisch sulfoniert. Anschliessend wurde der Film herausgenommen, gewaschen und getrocknet. Die Filmdicke betrug nun 57 µm. Nach einem Quellvorgang in Wasser, wobei die Dicke des Membranfilms nach dem Quellen etwa 80 µm betrug, wurde der Film mit verdünnter Base zum Neutralpunkt titriert. Aus dem Basenverbrauch wurde ein Sulfonierungsgrad von 93 % errechnet.

### Beispiel 2

Ein FEP-Film von 125 µm Dicke wurde wie im Beispiel 1 bestrahlt und gepfropft, worauf ein Pfropfungsgrad von 17 % errechnet wurde. Anschliessend wurde der gepfropfte Film wie in Beispiel 1 sulfoniert, worauf ein Sulfonierungsgrad von 96 % errechnet wurde.

### Beispiel 3

Ein FEP-Film von 75 µm Dicke wurde wie in Beispiel 1, jedoch mit einer Dosis von 6 Mrad, bestrahlt und anschliessend wie in Beispiel 1, jedoch in reinem Styrol, gepfropft, worauf ein Pfropfungsgrad von 45 % errechnet wurde. Anschliessend wurde der gepfropfte Film wie in Beispiel 1 sulfoniert, worauf ein Sulfonierungsgrad von 99 % errechnet wurde.

### Beispiel 4

Ein FEP-Film von 75 µm Dicke wurde mit einer Dosis von 7 Mrad bestrahlt und anschliessend bei -20°C in einem Gemisch 40 Vol.-% alpha-Methylstyrol und 60 Vol.-% Toluol während 50 Stunden gepfropft. Nach einer Weiterbehandlung wie in Beispiel 1 wurde ein Pfropfungsgrad von 19 % errechnet. Anschliessend wurde der gepfropfte Film wie in Beispiel 1 sulfoniert, worauf ein Sulfonierungsgrad von 88 % bestimmt wurde.

### Beispiel 5

Ein Film von 150 µm Dicke aus Polyethylen (PE) wurde wie in Beispiel 1, jedoch mit einer Dosis von 2 Mrad, bestrahlt und anschliessend wie in Beispiel 1, jedoch während 10 Stunden in einem Gemisch von 60 Vol.-% Styrol und 40 Vol.-% Benzol gepfropft, worauf ein Pfropfungsgrad von 31 % errechnet wurde. Anschliessend wurde der gepfropfte Film wie in Beispiel 1 sulfoniert, worauf ein Sulfonierungsgrad von 87 errechnet wurde.

### Beispiel 6

Ein Film von 100 µm Dicke aus Polyvinylfluorid (PVF) wurde wie in Beispiel 1, jedoch mit einer Dosis von 4 Mrad, bestrahlt und anschliessend wie in Beispiel 1, jedoch während 10 Stunden, gepfropft, worauf ein Pfropfungsgrad von 29 % errechnet wurde. Anschliessend wurde der gepfropfte Film wie in Beispiel 1 sulfoniert, worauf ein Sulfonierungsgrad von 94 % errechnet wurde.

### Beispiel 7

Ein PVF-Film von 100 µm Dicke wurde wie in Beispiel 4, jedoch mit einer Dosis von 10 Mrad, bestrahlt und anschliessend wie in Beispiel 4, jedoch während 60 Stunden, gepfropft, worauf ein Pfropfungsgrad von 28 % errechnet wurde. Anschliessend wurde der gepfropfte Film wie in Beispiel 1 sulfoniert, worauf ein Sulfonierungsgrad von 86 % errechnet wurde.

### Beispiel 8

Ein FEP-Film von 50 µm Dicke wurde wie in Beispiel 1, jedoch mit einer Dosis von 6 Mrad, bestrahlt und anschliessend wie in Beispiel 1, jedoch in einem Gemisch von 48 Vol.-% Styrol, 32 Vol.-% Divinylbenzol und 20 Vol.-% Benzol gepfropft, worauf ein Pfropfungsgrad von 19 % errechnet wurde. Anschliessend wurde der gepfropfte Film wie in Beispiel 1 sulfoniert, worauf ein Sulfonierungsgrad von 92 % errechnet wurde.

### Beispiel 9

Ein FEP-Film von 75 µm Dicke wurde wie in Beispiel 1, jedoch mit einer Dosis von 6 Mrad, bestrahlt und anschliessend wie in Beispiel 1, jedoch in einem Gemisch von 68 Vol.-% Styrol, 12 Vol.-% Divinylbenzol und 20 Vol.-% Benzol gepfropft, worauf ein Pfropfungsgrad von 25 % errechnet wurde. Anschliessend wurde der gepfropfte Film wie in Beispiel 1 sulfoniert, worauf ein Sulfonierungsgrad von 94 % errechnet wurde.

### Beispiel 10

Ein FEP-Film von 75 µm Dicke wurde wie in Beispiel 8 bestrahlt und gepfropft, worauf ein Pfropfungsgrad von 19 % errechnet wurde. Anschliessend wurde der gepfropfte Film wie in Beispiel 1 sulfoniert, worauf ein Sulfonierungsgrad von 91 % errechnet wurde.

### Beispiel 11

Ein FEP-Film von 75 µm Dicke wurde wie in Beispiel 1, jedoch mit einer Dosis von 6 Mrad, bestrahlt und anschliessend wie in Beispiel 1, jedoch in einem Gemisch von 31 Vol.-% Styrol und 70 Vol.-% Divinylbenzol und während 4 Stunden gepfropft, worauf ein Pfropfungsgrad von 15 % errechnet wurde. Anschliessend wurde der gepfropfte Film wie in Beispiel 1 sulfoniert, worauf ein Sulfonierungsgrad von 90 % errechnet wurde.

### Beispiel 12

Ein FEP-Film von 125 µm Dicke wurde wie in Beispiel 1, jedoch mit einer Dosis von 6 Mrad, bestrahlt und anschliessend wie in Beispiel 1, jedoch in einem Gemisch von 60 Vol.-% Styrol und 40 Vol.-% Divinylbenzol gepfropft, worauf ein Pfropfungsgrad von 19 % errechnet wurde. Anschliessend wurde der gepfropfte Film wie in Beispiel 1 sulfoniert, worauf ein Sulfonierungsgrad von 94 % errechnet wurde.

### Beispiel 13

Ein FEP-Film von 75 µm Dicke wurde wie in Beispiel 1, jedoch mit einer Dosis von 6 Mrad, bestrahlt und anschliessend wie in Beispiel 1, jedoch in einer Lösung von 17,5 Gew.-% Triallylcyanurat in reinem Styrol gepfropft, worauf ein Pfropfungsgrad von 29 % errechnet wurde. Anschliessend wurde der gepfropfte Film wie in Beispiel 1 sulfoniert, worauf ein Sulfonierungsgrad von 88 % errechnet wurde.

### Beispiel 14

Ein FEP-Film von 75 µm Dicke wurde wie in Beispiel 1, jedoch mit einer Dosis von 6 Mrad, bestrahlt und anschliessend wie in Beispiel 1, jedoch in einer Lösung von 7,5 Gew.-% Triallylcyanurat in einem Gemisch von 10 Vol.-% Divinylbenzol und 90 Vol.-% Styrol gepfropft, worauf ein Pfropfungsgrad von 40 % errechnet wurde. Anschliessend wurde der gepfropfte Film wie in Beispiel 1 sulfoniert, worauf ein Sulfonierungsgrad von 90 % errechnet wurde.

### Beispiel 15

Ein FEP-Film von 75 µm Dicke wurde in ein mit einem Gemisch von 90 Vol.-% Styrol und 10 Vol.-% Divinylbenzol gefülltes Glasgefäss gegeben, das anschliessend durch mehrere Gefrier- und Auftauzyklen entgast wurde. Daraufhin wurde das Glasgefäss in einer thermostatischen Co⁶⁰-Kammer im Laufe von etwa 10 Stunden bei etwa 60°C mit einer Dosis von 0,03 Mrad bestrahlt. Anschliessend wurde das Glasgefäss geöffnet, und der Film wurde herausgenommen und mit Toluol in einer Soxhletapparatur während 5 Stunden extrahiert. Danach wurde der Film unter Vakuum getrocknet und gewogen. Aus der Gewichtszunahme wurde ein Pfropfungsgrad von 18 %, bezogen auf das Ausgangsgewicht des FEP-Filmes, errechnet.

Der gepfropfte Film wurde in ein Glasgefäss gegeben, das ein Gemisch von 70 Vol.-% 1,1,2,2-Tetrachlorethan und 30 Vol.-% Chlorsulfonsäure enthielt. Unter Rühren wurde der Film bei 80°C während 5 Stunden in diesem Gemisch sulfoniert. Anschliessend wurde der Film herausgenommen, gewaschen und getrocknet. Nach einem Quellvorgang in Wasser wurde der Film mit verdünnter Base zum Neutralpunkt titriert. Aus dem Basenverbrauch wurde ein Sulfonierungsgrad von 94 % errechnet.

### Beispiel 16

Ein nach Beispiel 12 hergestellter Membranfilm wurde auf einer Fotolackschleuder mehrmals auf einer seiner Seiten mit einer Lösung eines im Handel (von Solution Technology, Mendenhall Pa., USA) erhältlichen Polymers auf der Basis von Poly(perfluoralkylen) sulfonsäure vom Typ Nafion (Warenzeichen von DuPont) nach dem "spin coating"-Verfahren beschichtet. Anschliessend erfolgte auf gleiche Weise die Beschichtung der anderen Seite des Membranfilms. Die Bestimmung der Dicke der Nafionschicht auf jeder Seite des Membranfilms erfolgte mit einem Dickenmessgerät (Digitaler Messtaster von Heidenhain) und ergab typischerweise Werte zwischen 0,5 und 5 µm. Anschliessend wurde die Membran während einer Stunde bei 120°C in einem Ofen belassen. Dieser nun beidseitig mit Nafion beschichtete Membranfilm wurde zusammen mit zwei nicht imprägnierten porösen Gasdiffusionselektroden (vom Typ ELAT der Firma E-Tek in Natick Ma., USA) mit H₂ und O₂ bei Normaldruck und 80°C während eines Zeitraums von 1000 Stunden in einer Brennstoffzelle getestet. Bei einer Stromdichte von 1 A/cm2 wurden in Abhängigkeit von der Betriebsdauer folgende ohmsche Verluste bestimmt:

| | | | | | |
|---|---|---|---|---|---|
| Betriebsdauer (h) | 20 | 250 | 500 | 750 | 1000 |
| Ohmscher Verlust (mV) | 471 | 474 | 477 | 479 | 483 |

### Beispiel 17

Ein nach Beispiel 14 hergestellter Membranfilm wurde nach Beispiel 16 beidseitig mit Nafion beschichtet und in einer Brennstoffzelle getestet. Bei einer Stromdichte von 1 A/cm2 wurden in Abhängigkeit von der Betriebsdauer folgende ohmsche Verluste bestimmt:

| | | | | | |
|---|---|---|---|---|---|
| Betriebsdauer (h) | 20 | 250 | 500 | 750 | 1000 |
| Ohmscher Verlust (mV) | 93 | 99 | 115 | 136 | 169 |

## Patentansprüche

1. Elektrochemische Zelle mit
• einem Paar von Elektroden mit je einem Elektrodenkörper aus porösem Trägermaterial, das im wesentlichen aus durch ein Bindemittel zusammengehaltenen Kohlenstoff-Partikeln besteht und Poren aufweist, die eine Perkolation von Fluid durch den Elektrodenkörper erlauben und in denen der Elektrodenkörper mit einem am Trägermaterial abgelagerten Katalysator geladen ist,
• einem zwischen den Elektroden angeordneten, die beiden Elektrodenkörper elektrochemisch kontaktierenden, als Elektrolyt und Separator der elektrochemischen Zelle wirkenden Membranfilm aus einem hydrophilen, Protonen leitenden, polymeren Material, wobei zwischen dem Membranfilm und dem Trägermaterial mit dem daran abgelagerten Katalysator eine Zwischenschicht vorgesehen ist,
• Mitteln zum Einleiten eines Fluids in mindestens eine der Elektroden,
• Mitteln zum Herausleiten eines Fluids aus mindestens einer der Elektroden, und
• Mitteln zum elektrischen Kontaktieren der Elektroden,
**dadurch gekennzeichnet, dass** das Material des Membranfilms ein mit endständig sulfonierten Vinylresten strahlengepfropftes Grundpolymer ist, wobei
• das Grundpolymer aus der von substituierten und unsubstituierten Polyolefinen, substituierten und unsubstituierten Vinylpolymeren und deren Copolymeren gebildeten Gruppe ausgewählt ist und
• die Vinylreste von Vinylmonomeren abgeleitet sind, die aus der von substituierten und unsubstituierten Vinylmonomeren gebildeten Gruppe ausgewählt sind,
**und dass** die Zwischenschicht aus einem Protonen leitenden hydrophilen Copolymer von mit ionenaustauschenden Gruppen substituiertem Poly(perfluoralkylen) und mit nicht ionenaustauschenden Gruppen substituiertem Poly(perfluoralkylen) besteht und zumindest auf einer Seite auf dem Membranfilm aufgebracht ist.

2. Elektrochemische Zelle nach Anspruch 1, **dadurch gekennzeichnet,** dass bei einem der Elektrodenkörper die Zwischenschicht das Trägermaterial mit dem daran abgelagerten Katalysator umhüllt, indem der Elektrodenkörper in seinen Poren mit dem Protonen leitenden hydrophilen Copolymer imprägniert ist.

3. Elektrochemische Zelle nach Anspruch 1, **dadurch gekennzeichnet,** dass das Grundpolymer ein aus der von Polyethylen, Polypropylen, Polytetrafluorethylen, Copolymer von Polytetrafluorethylen und Polyethylen, sowie Copolymer von Polytetrafluorethylen und Polyhexafluorpropylen gebildeten Gruppe ausgewähltes Polyolefin ist.

4. Elektrochemische Zelle nach Anspruch 1, **dadurch gekennzeichnet,** dass das Grundpolymer ein aus der von Polyvinylfluorid, Polyvinylchlorid und Polyvinylidendifluorid gebildeten Gruppe ausgewähltes Vinylpolymer ist.

5. Elektrochemische Zelle nach Anspruch 1, **dadurch gekennzeichnet,** dass das Vinylmonomer aus der von Styrol, alpha-Fluorstyrol, alpha-Methylstyrol und para-Chloromethylstyrol gebildeten Gruppe ausgewählt ist.

6. Elektrochemische Zelle nach Anspruch 1, **dadurch gekennzeichnet,** dass die am Grundpolymer strahlengepfropften Vinylreste durch von einem Vernetzungsmittel abgeleitete Reste vernetzt sind.

7. Elektrochemische Zelle nach Anspruch 6, **dadurch gekennzeichnet,** dass das Vernetzungsmittel aus der von Divinylbenzol und Triallylcyanurat sowie Mischungen davon gebildeten Gruppe ausgewählt ist.

8. Elektrochemische Zelle nach einem der Ansprüche 6 oder 7, **dadurch gekennzeichnet,** dass das Material des Membranfilms strahlengepfropfte Vinylmonomer-Reste und Vernetzungsmittel-Reste in einem relativen Gewichtsverhältnis zueinander bis zu etwa 60:40 enthält.

9. Elektrochemische Zelle nach einem der Ansprüche 1 bis 8, **dadurch gekennzeichnet, dass** das Material des Membranfilms 15 bis 45 Gew.-% strahlengepfropfte Vinylmonomer-Reste enthält.

10. Elektrochemische Zelle nach einem der Ansprüche 1 bis 9, **dadurch gekennzeichnet,** dass der Membranfilm eine Dicke von mehr als etwa 50 um aufweist.

11. Elektrochemische Zelle nach Anspruch 10, **dadurch gekennzeichnet,** dass der Membranfilm eine Dicke von 80 bis 170 um aufweist.

12. Elektrochemische Zelle nach einem der Ansprüche 1 bis 11, **dadurch gekennzeichnet, dass** sie eine Brennstoffzelle ist, wobei
• eines der Mittel zum Einleiten eines Fluids als Mittel zum Einleiten eines gasförmigen Brennstoffs in die eine Elektrode ausgebildet ist,
• ein anderes der Mittel zum Einleiten eines Fluids als Mittel zum Einleiten eines gasförmigen Oxidationsmittels in die andere Elektrode ausgebildet ist,
• eines der Mittel zum Herausleiten eines Fluids als Mittel zum Herausleiten von Reaktionsprodukten aus der Verbrennungsreaktion zwischen dem Brennstoff und dem Oxidationsmittel aus der einen Elektrode ausgebildet ist,
• und gegebenenfalls ein anderes der Mittel zum Herausleiten eines Fluids als Mittel zum Herausleiten von mit dem gasförmigen Oxidationsmittel zugeführten inerten Gasen aus der anderen Elektrode ausgebildet ist.

13. Elektrochemische Zelle nach einem der Ansprüche 1 bis 11, **dadurch gekennzeichnet, dass** sie eine Elektrolysenzelle ist, wobei
• die Mittel zum Einleiten eines Fluids als Mittel zum Einleiten eines zu elektrolysierenden Ausgangsmaterials ausgebildet sind,
• und die Mittel zum Herausleiten eines Fluids als Mittel zum Herausleiten von Reaktionsprodukten aus der elektrochemischen Zersetzung des Ausgangsmaterials ausgebildet sind.

14. Elektrochemische Zelle nach den Ansprüchen 12 und 13, **dadurch gekennzeichnet, dass** sie eine wahlweise als Brennstoffzelle oder Elektrolysenzelle betreibbare elektrochemische Zelle ist.

15. Verfahren zur Herstellung der elektrochemischen Zelle nach Anspruch 1, mit
• einem Paar von Elektroden mit je einem Elektrodenkörper aus porösem Trägermaterial, das im wesentlichen aus durch ein Bindemittel zusammengehaltenen Kohlenstoff-Partikeln besteht und Poren aufweist, die eine Perkolation von Fluid durch den Elektrodenkörper erlauben und in denen der Elektrodenkörper mit einem am Trägermaterial abgelagerten Katalysator geladen ist,
• einem zwischen den Elektroden angeordneten, die beiden Elektrodenkörper elektrochemisch kontaktierenden, als Elektrolyt und Separator der elektrochemischen Zelle wirkenden Membranfilm aus einem hydrophilen, Protonen leitenden, polymeren Material, wobei zwischen dem Membranfilm und dem Trägermaterial mit dem daran abgelagerten Katalysator eine Zwischenschicht vorgesehen ist,
• Mitteln zum Einleiten eines Fluids in mindestens eine der Elektroden,
• Mitteln zum Herausleiten eines Fluids aus mindestens einer der Elektroden, und
• Mitteln zum elektrischen Kontaktieren der Elektroden, **gekennzeichnet durch** die Verfahrensschritte von:
• Auswählen eines zu modifizierenden Grundpolymers aus der von substituierten und unsubstituierten Polyolefinen, substituierten und unsubstituierten Vinylpolymeren und deren Copolymeren gebildeten Gruppe,
• Auswählen eines Vinylmonomers aus der von substituierten und unsubstituierten Vinylmonomeren gebildeten Gruppe,
• Durchführung einer Pfropfungsreaktion des Grundpolymers mit dem Vinylmonomer in einem Gemisch davon durch Einwirkung von elektromagnetischer Strahlung auf das Gemisch zur Bildung des strahlengepfropften Polymers, und
• Sulfonierung des strahlengepfropften Polymers.

16. Verfahren nach Anspruch 15, **gekennzeichnet durch**
• Beigabe und Mischung des Vinylmonomers in das Grundpolymer zur Bildung des Gemisches, und
• Durchführung der Pfropfungsreaktion im Gemisch durch Einwirkung von elektromagnetischer Strahlung auf das Gemisch.

17. Verfahren nach Anspruch 15, **gekennzeichnet durch**
• Bestrahlung des Grundpolymers mit elektromagnetischer Strahlung zur Bildung eines pfropfungsfähigen Zwischenpolymers,
• Kühlung des Zwischenpolymers auf eine Temperatur unterhalb 0°C,
• Beigabe und Mischung des Vinylmonomers in das kühle pfropfungsfähige Zwischenpolymer zur Bildung eines kühlen Gemisches, und
• Durchführung der Pfropfungsreaktion im Gemisch durch Erhöhung der Temperatur des Gemisches zumindest bis auf 20°C.

18. Verfahren nach Anspruch 15 zur Herstellung des Materials des Membranfilms der elektrochemischen Zelle nach Anspruch 4, **gekennzeichnet durch**
• Beigabe und Mischung des Vinylmonomers und des Vernetzungsmittels in das Grundpolymer zur Bildung eines Gemisches,
• Durchführung der Pfropfungsreaktion durch Einwirkung von elektromagnetischer Strahlung auf das Gemisch bei gleichzeitigem Ablauf einer Vernetzungsreaktion der am Grundpolymer strahlengepfropften Vinylreste durch das Vernetzungsmittel zur Bildung des vernetzten strahlengepfropften Polymers.

19. Verfahren nach Anspruch 15 zur Herstellung des Materials des Membranfilms der elektrochemischen Zelle nach Anspruch 4, **gekennzeichnet durch**
• Bestrahlung des Grundpolymers mit elektromagnetischer Strahlung zur Bildung eines pfropfungsfähigen Zwischenpolymers,
• Kühlung des Zwischenpolymers auf eine Temperatur unterhalb 0°C,
• Beigabe und Mischung des Vinylmonomers und des Vernetzungsmittels in das kühle pfropfungsfähige Zwischenpolymer zur Bildung eines kühlen Gemisches, und
• Durchführung der Pfropfungsreaktion im Gemisch durch Erhöhung der Temperatur des Gemisches zumindest bis auf 20°C bei gleichzeitigem Ablauf einer Vernetzungsreaktion der am Grundpolymer strahlengepfropften Vinylreste durch das Vernetzungsmittel zur Bildung des vernetzten strahlengepfropften Polymers.

## Claims

1. Electrochemical cell comprising
• a pair of electrodes each having one electrode body made of porous base material which essentially consists of carbon particles held together by a binder and has pores which permit percolation of fluid through the electrode body, and in which the electrode body is charged with a catalyst deposited on the base material,
• a membrane film which is arranged between the electrodes, contacts the two electrode bodies electrochemically, acts as an electrolyte and separator of the electrochemical cell and is made of a hydrophilic, proton-conducting polymer material, an interlayer being provided between the membrane film and the base material with the catalyst deposited thereon,
• means for introducing a fluid into at least one of the electrodes,
• means for passing out a fluid from at least one of the electrodes, and
• means for making electrical contact with the electrodes,
**characterized in that** the material of the membrane film is a base polymer radiation-grafted with terminally sulphonated vinyl radicals,
• the base polymer being selected from the group formed by substituted and unsubstituted polyolefins, substituted and unsubstituted vinyl polymers and their copolymers and
• the vinyl radicals being derived from vinyl monomers which are selected from the group formed by substituted and unsubstituted vinyl monomers,
**and in that** the interlayer comprises a proton-conducting hydrophilic copolymer of poly(perfluoroalkylene) which is substituted with ion-exchanging groups, and poly(perfluoroalkylene) which is substituted with non-ion-exchanging groups, and has been applied to the membrane film at least on one side.

2. Electrochemical cell according to Claim 1, **characterized in that** in the case of one of the electrode bodies the interlayer envelops the base material with the catalyst deposited thereon, the electrode body being impregnated in its pores with the proton-conducting hydrophilic copolymer.

3. Electrochemical cell according to Claim 1, **characterized in that** the base polymer is a polyolefin selected from the group formed by polyethylene, polypropylene, poly(tetrafluoroethylene), copolymer of poly(tetrafluoroethylene) and polyethylene, and copolymer of poly(tetrafluoroethylene) and poly(hexafluoropropylene).

4. Electrochemical cell according to Claim 1, **characterized in that** the base polymer is a vinyl polymer selected from the group formed by poly(vinyl fluoride), poly(vinyl chloride) and poly(vinylidene difluoride).

5. Electrochemical cell according to Claim 1, **characterized in that** the vinyl monomer is selected from the group formed by styrene, α-fluorostyrene, α-methylstyrene and para-chloromethylstyrene.

6. Electrochemical cell according to Claim 1, **characterized in that** the vinyl radicals radiation-grafted to the base polymer are cross-linked by radicals derived from a cross-linking agent.

7. Electrochemical cell according to Claim 6, **characterized in that** the cross-linking agent is selected from the group formed by divinylbenzene and triallyl cyanurate and mixtures thereof.

8. Electrochemical cell according to either Claim 6 or 7, **characterized in that** the material of the membrane film contains radiation-grafted vinyl monomer radicals and cross-linking agent radicals in a relative weight ratio with respect to one another of up to approximately 60:40.

9. Electrochemical cell according to any one of Claims 1 to 8, **characterized in that** the material of the membrane film contains from 15 to 45% by weight of radiation-grafted vinyl monomer radicals.

10. Electrochemical cell according to any one of Claims 1 to 9, **characterized in that** the membrane film has a thickness of more than approximately 50 µm.

11. Electrochemical cell according to Claim 10, **characterized in that** the membrane film has a thickness of from 80 to 170 µm.

12. Electrochemical cell according to any one of Claims 1 to 11, **characterized in that** it is a fuel cell,
• one of the means for introducing a fluid being designed as a means for introducing a gaseous fuel into the one electrode,
• another of the means for introducing a fluid being designed as a means for introducing a gaseous oxidant into the other electrode,
• one of the means for passing out a fluid being designed as a means for passing out reaction products from the combustion reaction between the fuel and the oxidant from the one electrode,
• and optionally another of the means for passing out a fluid being designed as a means for passing out inert gases, which have been supplied with the gaseous oxidant, from the other electrode.

13. Electrochemical cell according to any one of Claims 1 to 11, **characterized in that** it is an electrolytic cell,
• the means for introducing a fluid being designed as a means for introducing a starting material to be electrolysed,
• and the means for passing out a fluid being designed as a means for passing out reaction products from the electrochemical decomposition of the starting material.

14. Electrochemical cell according to Claims 12 and 13, **characterized in that** it is an electrochemical cell which can optionally be operated as a fuel cell or an electrolytic cell.

15. Process for preparing the electrochemical cell according to Claim 1, comprising
• a pair of electrodes each having one electrode body made of porous base material which essentially consists of carbon particles held together by a binder and has pores which permit percolation of fluid through the electrode body, and in which the electrode body is charged with a catalyst deposited on the base material,
• a membrane film which is arranged between the electrodes, contacts the two electrode bodies electrochemically, acts as an electrolyte and separator of the electrochemical cell and is made of a hydrophilic, proton-conducting polymer material, an interlayer being provided between the membrane film and the base material with the catalyst deposited thereon,
• means for introducing a fluid into at least one of the electrodes,
• means for passing out a fluid from at least one of the electrodes, and
• means for making electrical contact with the electrodes,
**characterized by** the process steps of:
• selecting a base polymer to be modified, from the group formed by substituted and unsubstituted polyolefins, substituted and unsubstituted vinyl polymers and their copolymers,
• selecting a vinyl monomer from the group formed by substituted and unsubstituted vinyl monomers,
• carrying out a grafting reaction of the base polymer with the vinyl monomer in a mixture thereof by exposing the mixture to electromagnetic radiation to form the radiation-grafted polymer, and
• sulphonating the radiation-grafted polymer.

16. Process according to Claim 15, **characterized by**
• adding and blending the vinyl monomer into the base polymer to form the mixture, and
• carrying out the grafting reaction in the mixture by exposing the mixture to electromagnetic radiation.

17. Process according to Claim 15, **characterized by**
• irradiating the base polymer with electromagnetic radiation to form a graftable intermediate polymer,
• cooling the intermediate polymer to a temperature below 0°C,
• adding and blending the vinyl monomer into the cool graftable intermediate polymer to form a cool mixture, and
• carrying out the grafting reaction in the mixture by raising the temperature of the mixture to at least 20°C.

18. Process according to Claim 15 for preparing the material of the membrane film of the electrochemical cell according to Claim 4, **characterized by**
• adding and blending the vinyl monomer and the cross-linking agent into the base polymer to form a mixture,
• carrying out the grafting reaction by exposing the mixture to electromagnetic radiation while at the same time a cross-linking reaction of the vinyl radicals radiation-grafted onto the base polymer takes place by means of the cross-linking agent to form the cross-linked radiation-grafted polymer.

19. Process according to Claim 15 for preparing the material of the membrane film of the electrochemical cell according to Claim 4, **characterized by**
• irradiating the base polymer with electromagnetic radiation to form a graftable intermediate polymer,
• cooling the intermediate polymer to a temperature below 0°C,
• adding and blending the vinyl monomer and the cross-linking agent into the cool graftable intermediate polymer to form a cool mixture, and
• carrying out the grafting reaction in the mixture by raising the temperature of the mixture to at least 20°C while at the same time a cross-linking reaction of the vinyl radicals radiation-grafted onto the base polymer takes place by means of the cross-linking agent to form the cross-linked radiation-grafted polymer.

## Revendications

1. Cellule électrochimique comprenant
- une paire d'électrodes comprenant chacune un corps d'électrode constitué d'une matière de support poreuse, celle-ci étant constituée essentiellement par des particules de carbone maintenues ensemble par un liant et présentant des pores qui permettent une percolation de fluides à travers le corps d'électrode, et dans lesquelles le corps d'électrode est chargé avec un catalyseur déposé sur la matière de support,
- un film à membrane constitué d'une matière polymère hydrophile à conductibilité protonique, faisant office d'électrolyte et de séparateur de la cellule électrochimique, venant se mettre en contact par voie électrochimique avec les deux corps d'électrodes et étant disposé entre les électrodes, dans lequel on prévoit une couche intermédiaire entre le film à membrane et la matière de support sur laquelle est déposé le catalyseur,
- des moyens pour introduire un fluide dans au moins une des électrodes,
- des moyens pour évacuer un fluide d'au moins une des électrodes, et
- des moyens pour assurer un contact électrique entre les électrodes, caractérisée en ce que la matière du film à membrane est un polymère de base greffé par rayonnement avec des radicaux vinyle sulfonés en bout de chaîne, dans laquelle
- le polymère de base est sélectionné parmi le groupe formé par des polyoléfines substituées et non substituées, par des polymères vinyliques substitués et non substitués, et par leurs copolymères, et
- les radicaux vinyle dérivent de monomères vinyliques qui sont sélectionnés parmi le groupe formé par des monomères vinyliques substitués et non substitués,
et en ce que la couche intermédiaire est constituée par un copolymère hydrophile à conductibilité protonique d'un polyalkylène perfluoré portant, à titre de substituant, un ou plusieurs groupes échangeurs d'ions et d'un polyalkylène perfluoré portant, à titre de substituant, un ou plusieurs groupes non échangeurs d'ions, et est appliquée sur au moins une face du film à membrane.

2. Cellule électrochimique selon la revendication 1, caractérisée en ce que, dans un des corps d'électrodes, la couche intermédiaire entoure la matière de support sur laquelle est déposée le catalyseur, par le fait que le corps d'électrode est imprégné dans ses pores avec le copolymère hydrophile à conductibilité protonique.

3. Cellule électrochimique selon la revendication 1, caractérisée en ce que le polymère de base est une polyoléfine choisie parmi le groupe formé par le polyéthylène, le polypropylène, le polytétrafluoréthylène, un copolymère de polytétrafluoréthylène et de polyéthylène, et un copolymère de polytétrafluoréthylène et de polyhexafluoropropylène.

4. Cellule électrochimique selon la revendication 1, caractérisée en ce que le polymère de base est un polymère vinylique choisi parmi le groupe formé par le fluorure de polyvinyle, le chlorure de polyvinyle et le difluorure de polyvinylidène.

5. Cellule électrochimique selon la revendication 1, caractérisée en ce que le monomère vinylique est choisi parmi le groupe formé par le styrène, l'alpha-fluorostyrène, l'alpha-méthylstyrène et le parachlorométhylstyrène.

6. Cellule électrochimique selon la revendication 1, caractérisée en ce que les radicaux vinyle greffés par rayonnement sur le polymère de base ont été réticulés via des radicaux dérivés d'un agent de réticulation.

7. Cellule électrochimique selon la revendication 6, caractérisée en ce que l'agent de réticulation est choisi parmi le groupe formé par le divinylbenzène et par le cyanurate de triallyle, ainsi que par leurs mélanges.

8. Cellule électrochimique selon l'une quelconque des revendications 6 ou 7, caractérisée en ce que la matière du film à membrane contient des radicaux de monomères vinyliques greffés par rayonnement et des radicaux d'agents de réticulation dans un rapport pondéral relatif mutuel s'élevant jusqu'à environ 60:40.

9. Cellule électrochimique selon l'une quelconque des revendications 1 à 8, caractérisée en ce que la matière du film à membrane contient des radicaux de monomères vinyliques greffés par rayonnement à concurrence de 15 à 45% en poids.

10. Cellule électrochimique selon l'une quelconque des revendications 1 à 9, caractérisée en ce que le film à membrane présente une épaisseur supérieure à environ 50 µm.

11. Cellule électrochimique selon la revendication 10, caractérisée en ce que le film à membrane présente une épaisseur de 80 à 170 µm.

12. Cellule électrochimique selon l'une quelconque des revendications 1 à 11, caractérisée en ce qu'elle représente une pile à combustible, dans laquelle
- un des moyens pour introduire un fluide est réalisé sous forme de moyen pour introduire un combustible gazeux dans la première électrode,
- un autre moyen pour introduire un fluide est réalisé sous forme de moyen pour introduire un agent d'oxydation gazeux dans l'autre électrode,
- un des moyens pour évacuer un fluide est réalisé sous forme de moyen pour évacuer de la première électrode des produits réactionnels issus de la réaction de combustion entre le combustible et l'agent d'oxydation,
- et le cas échéant, un autre moyen pour évacuer un fluide est réalisé sous forme de moyen pour évacuer de l'autre électrode des gaz inertes entraînés avec l'agent d'oxydation gazeux.

13. Cellule électrochimique selon l'une quelconque des revendications 1 à 11, caractérisée en ce qu'elle représente une cellule d'électrolyse, dans laquelle
- les moyens pour introduire un fluide sont réalisés sous forme de moyens pour introduire une matière de départ destinée à l'électrolyse,
- et les moyens pour évacuer un fluide sont réalisés sous forme de moyens pour évacuer des produits réactionnels issus de la décomposition électrochimique de la matière de départ.

14. Cellule électrochimique selon l'une quelconque des revendications 12 et 13, caractérisée en ce qu'elle représente une cellule électrochimique qui peut fonctionner de manière sélective à titre de pile à combustible ou de cellule d'électrolyse.

15. Procédé pour la fabrication de la cellule électrochimique selon la revendication 1, comprenant
- une paire d'électrodes comprenant chacune un corps d'électrode constitué d'une matière de support poreuse, celle-ci étant constituée essentiellement par des particules de carbone maintenues ensemble par un liant et présentant des pores qui permettent une percolation de fluides à travers le corps d'électrode, et dans lesquelles le corps d'électrode est chargé avec un catalyseur déposé sur la matière de support,
- un film à membrane constitué d'une matière polymère hydrophile à conductibilité protonique, faisant office d'électrolyte et de séparateur de la cellule électrochimique, venant se mettre en contact par voie électrochimique avec les deux corps d'électrodes et étant disposé entre les électrodes, dans lequel on prévoit une couche intermédiaire entre le film à membrane et la matière de support sur laquelle est déposé le catalyseur,
- des moyens pour introduire un fluide dans au moins une des électrodes,
- des moyens pour évacuer un fluide d'au moins une des électrodes, et
- des moyens pour assurer un contact électrique entre les électrodes,
caractérisée par les étapes opératoires consistant à:
- sélectionner un polymère de base à modifier choisi parmi le groupe formé par des polyoléfines substituées et non substituées, par des polymères vinyliques substitués et non substitués, et par leurs copolymères,
- sélectionner un monomère vinylique choisi parmi le groupe formé par des monomères vinyliques substitués et non substitués,
- mettre en oeuvre une réaction de greffage du polymère de base avec le monomère vinylique dans un mélange de ces derniers sous l'effet d'un rayonnement électromagnétique agissant sur le mélange pour former le polymère greffé par rayonnement, et
- soumettre le polymère greffé par rayonnement à une sulfonation.

16. Procédé selon la revendication 15, caractérisé par
- l'addition et le mélange du monomère vinylique dans le polymère de base pour former le mélange, et
- la mise en oeuvre de la réaction de greffage dans le mélange sous l'effet du rayonnement électromagnétique agissant sur le mélange.

17. Procédé selon la revendication 15, caractérisé par
- l'exposition du polymère de base à un rayonnement électromagnétique pour former un polymère intermédiaire manifestant une aptitude au greffage,
- le refroidissement du polymère intermédiaire à une température inférieure à 0°C,
- l'addition et le mélange du monomère vinylique dans le polymère intermédiaire refroidi manifestant une aptitude au greffage pour former un mélange refroidi, et
- la mise en oeuvre de la réaction de greffage dans le mélange par élévation de la température du mélange jusqu'à au moins 20°C.

18. Procédé selon la revendication 15 pour la fabrication de la matière du film à membrane de la cellule électrochimique selon la revendication 4, caractérisé par
- l'addition et le mélange du monomère vinylique et de l'agent de réticulation dans le polymère de base pour former un mélange,
- la mise en oeuvre de la réaction de greffage par l'effet du rayonnement électromagnétique sur le mélange, tandis que se déroule simultanément une réaction de réticulation des radicaux vinyle greffés par rayonnement sur le polymère de base, via l'agent de réticulation, pour obtenir un polymère réticulé, greffé par rayonnement.

19. Procédé selon la revendication 15 pour la fabrication de la matière du film à membrane de la cellule électrochimique selon la revendication 4, caractérisé par
- l'exposition du polymère de base à un rayonnement électromagnétique pour la formation d'un polymère intermédiaire manifestant une aptitude au greffage,
- le refroidissement du polymère intermédiaire à une température inférieure à 0°C,
- l'addition et le mélange du monomère vinylique et de l'agent de réticulation dans le polymère intermédiaire refroidi manifestant une aptitude au greffage pour former un mélange refroidi, et
- la mise en oeuvre de la réaction de greffage dans le mélange par élévation de la température du mélange jusqu'à au moins 20°C, tandis que se déroule de manière simultanée une réaction de réticulation des radicaux vinyle greffés par rayonnement sur le polymère de base, via l'agent de réticulation, pour obtenir un polymère réticulé, greffé par rayonnement.
